# EUROPÄISCHE PATENTSCHRIFT

(11) **EP 0 939 585 B1**
(45) Veröffentlichungstag und Bekanntmachung des Hinweises auf die Patenterteilung: **24.04.2002**
(21) Anmeldenummer: 98954137.0
(22) Anmeldetag: 03.09.1998
(51) Int. Cl.: A01G 1/00

(54) **BAHNFÖRMIGER VEGETATIONSKÖRPER**
VEGETATION STRIP
CORPS VEGETAL EN FORME DE BANDE

(30) Priorität: 16.09.1997 DE 19740682
(43) Veröffentlichungstag der Anmeldung: 08.09.1999
(73) Patentinhaber: Behrens, Wolfgang, D-27243 Gross Ippener (DE)
(72) Erfinder: Behrens, Wolfgang, D-27243 Gross Ippener (DE)
(74) Vertreter: Thömen, Uwe, Dipl.-Ing.
(86) Internationale Anmeldenummer: DE9802638
(87) Internationale Veröffentlichungsnummer: WO9913703

(56) Entgegenhaltungen:
- DE-A- 3 408 698
- DE-A- 3 631 716
- DE-A- 3 823 365
- DE-C- 19 523 406
- DE-U- 8 806 092
- DE-U- 29 708 733

## Beschreibung

Die Erfindung betrifft einen bahnförmigen Vegetationskörper mit einer Strukturmatte, insbesondere einer Schlingmatte, gemäß dem Oberbegriff des Patentanspruchs 1.

Derartige bahnförmige Vegetationskörper sind beispielsweise aus der EP 0 172 839 B1 und aus der DE 42 19 275 C2 bekannt. Diese und ähnliche bahnförmigen Vegetationskörper werden insbesondere zur Dachbegrünung verwendet. Um ein Flach- oder Schrägdach mit derartigen Matten zu begrünen, werden die Vegetationskörper nebeneinander auf das Dach aufgelegt, wobei die Vegetationskörper als Bahnen nebeneinander stumpf auf Stoß verlegt werden. Hierbei werden die Vegetationskörper entweder direkt auf die Dachfläche oder auf eine auf das Dach aufgebrachte Substratschicht aufgelegt. Vor der Verlegung auf dem Dach werden die bahnförmigen Vegetationskörper üblicherweise vorkultiviert, d. h., die Vegetationskörper werden vor der Verlegung auf dem Dach mit Substrat und keimfähigem Pflanzenmaterial aufgefüllt. Als keimfähiges Pflanzenmaterial haben sich hier insbesondere Pflanzensamen, Sprossen von Sedumarten und Moossporen bewährt.

Die Strukturmatte derartiger Vegetationskörper dient dem Halt und Zusammenhalt des Substratmaterials und der Pflanzenteile. Die unter der Strukturmatte angeordnete poröse Unterlage, welche üblicherweise aus Kokosfasern, Steinwolle, Textilfasern oder anderen geeigneten Materialien besteht, dient der Wasserspeicherung, der Drainage und dem Halt der Wurzeln der Pflanzen, sowie als Trennlage für abschwemmbare Teichen.

Die bisher bekannten Vegetationskörper haben sich weitgehend bewährt. Es hat sich jedoch gezeigt, daß insbesondere durch längere Trockenperioden die stumpf aneinander liegenden Vegetationskörper schrumpfen, wodurch Lücken zwischen den einzelnen Bahnen entstehen. Diese Lücken stören nicht nur den optischen Eindruck, sondern sie bringen auch die Gefahr mit sich, daß Windkräfte auf die Unterseiten der Vegetationskörper einwirken können, wodurch die Vegetationskörper durch Windsog angehoben und die Dachbegrünung zumindest teilweise zerstört werden. Wenn die Vegetationskörper mit Substratmaterial unterlegt sind, kann durch die Schrumpfungslücken zudem das Substratmaterial durch Windeinflüsse erodieren.

Durch die DE 38 15 662 A1 ist ein flächiges Bauteil für gartenbautechnische Verwendung bekannt, welches wenigstens zwei eigenständig aufgebaute Lagen aufweist, von denen wenigstens eine Lage eine selbsttragende Struktur besitzt. Die untere Lage ist durch eine Drainageplatte gebildet, auf der sich als obere Lage eine Vegetationsplatte befindet, die größtenteils aus natürlichem organischem Material besteht. Zur Bildung eines eine Einheit darstellenden formstabilen Bauteils sind die beiden Lagen miteinander verbunden. Beide Lage sind viereckig mit im wesentlichen gleichen Längen- und Breitenabmessungen ausgebildet, wobei die Vegetationsplatte als obere Lage gegenüber der unteren Drainageplatte translatorisch versetzt angeordnet ist.

Durch den Versatz zwischen der Vegetationsplatte und der Drainageplatte soll erreicht werden, daß zwischen benachbarten Bauteilen keine durchgehende Rinnen von dem auf die Vegetationsplatte nachträglich aufgebrachten Vegetationssubstrat zu einem Flachdach entstehen, auf welches das flächige Bauteil aufgelegt wird. Da bei dem bekannten flächigen Bauteil der Versatz zwischen der kompletten mit dem Vegetationssubstrat versehenen Vegetationsplatte einerseits und der darunter befindlichen Drainageplatte andererseits vorgesehen ist, und da somit die Vegetationsplatten selbst stumpf und ohne Versatz aneinander liegen, lassen sich die voranstehend erwähnten Schrumpfungslücken auch bei diesem flächigen Bauteil nicht vermeiden.

Aufgabe der Erfindung ist es daher, einen bahnförmigen Vegetationskörper der eingangs genannten Art zu schaffen, durch welchen die Folgen trocknungsbedingten Schrumpfes ausgeglichen oder verhindert werden können.

Diese Aufgabe wird mit einem bahnförmigen Vegetationskörper der eingangs genannten Art gelöst, welcher die Merkmale des kennzeichnenden Teils des Patentanspruchs 1 aufweist.

Erfindungsgemäß ist die Strukturmatte des bahnförmigen Vegetationskörpers derart auf der Unterlage angeordnet, daß ein erster Seitenkantenbereich der Strukturmatte über eine erste Seitenkante der Unterlage übersteht und daß ein gegenüberliegender zweiter Seitenkantenbereich der Unterlage unter einer zweiten Seitenkante der Strukturmatte hervorsteht, so daß Strukturmatte und Unterlage von nebeneinander liegenden Vegetationskörpern sich überlappen.

Zwar ist auch bei dem bekannten flächigen Bauteil gemäß der DE 38 15 662 A1 eine Überlappung vorhanden, diese Überlappung betrifft aber nicht den Vegetationskörper selbst, sondern bezieht sich auf eine unter dem Vegetationskörper befestigte Drainageplatte. Innerhalb des Aufbaus des bekannten Vegetationskörpers bzw. der bekannten Vegetationsplatte ist demgegenüber keine Überlappung vorgesehen.

Bei der Erfindung wird auf überraschend einfache Weise ein bahnförmiger Vegetationskörper geschaffen, mit dem die Folgen trocknungsbedingten Schrumpfes verhindert oder zumindest ausgeglichen werden können. Werden nämlich zwei der erfindungsgemäßen Vegetationskörper nebeneinander auf Stoß verlegt, überdeckt die Strukturmatte des einen Vegetationskörpers die Unterlage des anderen Vegetationskörpers. Bei trocknungsbedingtem Schrumpf der beiden Vegetationskörper überdeckt die Strukturmatte des einen Vegetationskörpers immer noch zumindest einen Randbereich der Unterlage des anderen Vegetationskörpers. Hierbei liegt zwar die Unterlage des einen Vegetationskörpers zumindest teilweise frei, auftretende Windkräfte können aber nicht an die Unterseiten der Vegetationskörper angreifen und/oder das im Bedarfsfall unter den Vegetationskörpern angeordnete Substratmaterial erodieren. Der optische Eindruck wird hierbei kaum gestört werden, da die Unterlagen üblicherweise aus einem relativ dunklen Material bestehen, und zudem die Kantenbereiche der Vegetationskörper von den auf dem Vegetationskörper wachsenden Pflanzen überwallt werden.

Wenn die Pflanzen des Vegetationskörpers längere Zeit gewachsen sind, d. h., daß ihre Wurzeln durch die Strukturmatte in die Unterlage eingewachsen sind, kann ein Trocknungsschrumpf fast vollständig vermieden werden. In diesem Fall wachsen nämlich die Wurzeln der Pflanzen im Überhangsbereich der Strukturmatte eines Vegetationskörpers in die Unterlage eines anderen Vegetationskörpers ein. Durch diese Durchwurzelung werden aneinander anstoßende Vegetationskörper derart miteinander verzahnt, daß Schrumpfungsprozesse aufgehalten oder zumindest stark verlangsamt werden.

Vorteilhafterweise ist die Überlappung des Vegetationskörpers auf beiden Seiten gleichmäßig, wobei die Breite der Überlappung in einer praktischen Ausgestaltung der Erfindung 2 bis 20 cm beträgt. Hierdurch kann eine Vielzahl von erfindungsgemäßen Vegetationskörpern derart verlegt werden, daß die Strukturmatten und die porösen Unterlagen jeweils aneinander anstoßen bzw. die überhängenden Bereiche der Strukturmatte die frei liegenden Bereiche der porösen Unterlagen vollständig überdecken. Auf diese Weise kann ein geschlossener Verband einer Vielzahl von Vegetationskörpern geschaffen werden, bei denen ein geschlossener Pflanzenverband gewährleistet ist.

In bevorzugten Ausführungsformen der Erfindung ist die poröse Unterlage eine Matte aus nachwachsenden Rohstoffen, wie z.B. Kokosfasern, aus Mineralwolle oder aus Textilfasern. Derartige Matten sind gut geeignet, um als Wasser- und Nährstoffspeicher für die Pflanzen zu dienen, zudem gewährleisten sie eine gute Drainage und stellen für die Pflanzen ein Substrat dar. Wenn die durch Verrottungsprozesse zur Verfügungstellung von Nährstoffen im Vordergrund steht, wird man Matten aus Kokosfasern oder Textilfasern bevorzugen, wenn Brandschutzgesichtspunkte im Vordergrund stehen, wird man solche aus Mineralwolle bevorzugen.

In einer weiteren Ausgestaltung der Erfindung ist vorgesehen, daß die Unterlage ein Vlies aus Kunstfasern ist. Solche Vliese werden insbesondere bei der Verlegung der Vegetationskörper auf Schrägdächern bevorzugt, da diese Vlies in der Lage sind, entstehende Zugkräfte aufzunehmen.

In einer praktischen Ausgestaltung der Erfindung weisen Strukturmatte und Unterlage jeweils eine Breite von 0,5 - 2 m und der Vegetationskörper eine Dicke von 0,5 bis 10 cm auf.

Bei einer anderen Ausgestaltung der Erfindung ist die Strukturmatte an ihrer Unterseite mit einem Vlies, bevorzugterweise einem Polyestervlies, verbunden. Hierbei überlappen sich Unterlage und Vlies entsprechend den Merkmalen des kennzeichnenden Teils des Patentanspruchs 10. Ein derartiges Polyestervlies, welches sehr dünn ausgelegt werden kann, beispielsweise mit einer Dicke von 0,2 bis 3 mm, ist sehr gut geeignet, insbesondere bei Schrägdächern, Zugkräfte aufzunehmen, es ermöglicht aber gleichzeitig das Durchwurzeln der Pflanzen bis in die poröse Unterlage.

Weitere vorteilhafte Ausgestaltungen der Erfindung ergeben sich aus der Beschreibung, der Zeichnung und der Patentansprüche. In der Zeichnung zeigen:
- Fig. 1: einen Querschnitt durch eine erste Ausführungsform des erfindungsgemäßen bahnförmigen Vegetationskörpers,
- Fig. 2: einen Querschnitt durch eine zweite Ausführungsform des erfindungsgemäßen bahnförmigen Vegetationskörpers, und
- Fig. 3: einen Querschnitt durch einen Teilbereich zweier nebeneinander verlegter erfindungsgemäßer Vegetationskörper.

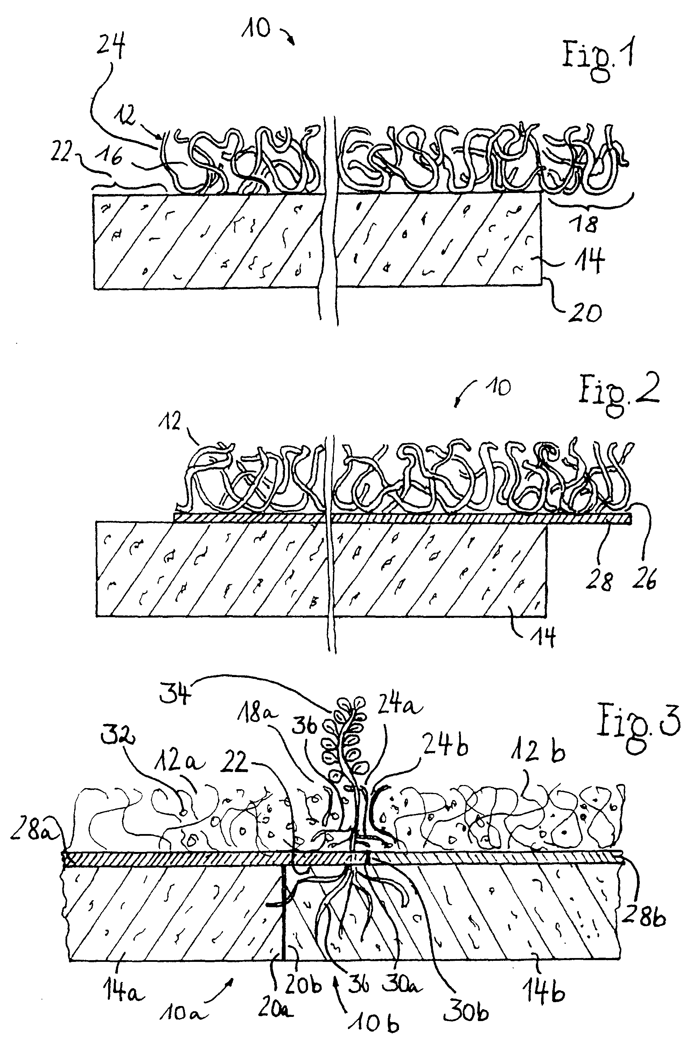

In Fig. 1 ist ein erstes Ausführungsbeispiel eines erfindungsgemäßen bahnförmigen Vegetationsträgers 10 dargestellt. Dieser weist eine Strukturmatte 12 auf, welche auf einer porösen Unterlage 14 angeordnet ist. Die Strukturmatte 12 wird im in Fig. 1 dargestellten Ausführungsbeispiel aus einer Schlingmatte 16 gebildet, welche eine Vielzahl von beispielsweise Kunststoffäden oder dergleichen aufweist, die eine Struktur bilden und zwischen sich Zwischenräume bilden. Die Dicke bzw. Höhe der Schlingmatte 16 kann etwa 10 mm betragen. Anstelle der Schlingmatte 16 kann als Strukturmatte 12 bei der Erfindung auch eine nicht dargestellte Gewebematte verwendet werden.

Ein Seitenkantenbereich 18 der Strukturmatte 12 steht über eine Seitenkante 20 der Unterlage 14 über und bildet somit einen Überhang. Auf der gegenüberliegenden Seite des Vegetationskörpers 10 steht ein Seitenkantenbereich 22 der Unterlage 14 unter einer Seitenkante 24 der Strukturmatte 12 hervor und bildet somit einen Absatz.

Auf die derart beschriebene Weise überlappen sich Strukturmatte 12 und poröse Unterlage 14.

In Fig. 2 ist ein zweites Ausführungsbeispiel des erfindungsgemäßen Vegetationskörpers 10 dargestellt. Bei diesem ist die Strukturmatte 12 auf der Unterlage 14 entsprechend dem ersten Ausführungsbeispiel gemäß Fig. 1 angeordnet, hierbei ist jedoch die Strukturmatte 12 an ihrer Unterseite 26 mit einem Polyestervlies 28 versehen. Dieses Polyestervlies 28 dient der Aufnahme von bei der Verlegung auf Schrägdächern entstehenden Zugkräften.

In Fig. 3 ist beispielhaft die Verlegung von zwei erfindungsgemäßen Vegetationskörpern 10a und 10b dargestellt. Hierbei entsprechen beide Vegetationskörper 10a und 10b in ihrem Aufbau dem Vegetatitonskörper 10 aus Fig. 2. Die Vegetationskörper 10a und 10b sind mit den Seitenkanten 20a und 20b der Unterlagen 14a und 14b bzw. mit den Seitenkanten 24b und 24 a der Strukturmatten 12a und 12b und mit Kanten 30a und 30b der Polyestervliese 28a und 28b jeweils auf Stoß verlegt. Der überlappende Seitenkantenbereich 18a der Strukturmatte 12a des Vegetationskörpers 10a liegt auf dem Seitenkantenbereich 22b der porösen Unterlage 14b des Vegetationskörpers 10b auf.

Im dargestellten Ausführungsbeispiel nach Fig. 3 sind die Strukturmatten 12a und 12b zumindest teilweise mit Substrat 32 aufgefüllt. Dieses Substrat 32 kann sich als organisches Material, wie Humus, Torf, Rindenmulch oder dergleichen, oder als körniges mineralisches Material, wie Sand, Kies oder dergleichen, darstellen oder als Gemisch von beiden.

In Fig. 3 ist ebenso angedeutet, daß eine Pflanze 34 mit ihren Wurzeln 36 sowohl innerhalb der Hohlräume der Strukturmatte 12a bzw. 12b, als auch in der Unterlage 14b bzw. 14a Halt findet. Durch diese Durchwurzelungstätigkeit der Pflanze 34 werden die überlappenden Bereiche der Strukturmatte 12a des Vegetationskörpers 10a mit der Unterlage 14b des Vegetationskörpers 10b verbunden.

## Patentansprüche

1. Bahnförmiger Vegetationskörper (10) mit einer Strukturmatte (12), insbesondere einer Schlingmatte (16), welche auf wenigstens einer Unterlage (14) angeordnet ist, wobei die Strukturmatte mit einem Substrat (32) und mit keimfähigem Pflanzenmaterial, insbesondere mit Samen, Sprossen, Sporen oder Sproßteilen, ausfüllbar ist, **dadurch gekennzeichnet, daß** die Strukturmatte (12) derart auf der Unterlage (14) angeordnet ist, daß ein erster Seitenkantenbereich (18) der Strukturmatte (12) über eine erste Seitenkante (20) der Unterlage (14) übersteht und daß ein gegenüberliegender zweiter Seitenkantenbereich (22) der Unterlage (14) unter einer zweiten Seitenkante (24) der Strukturmatte (12) hervorsteht, so daß Strukturmatte (12) und Unterlage (14) benachbarter Vegetationskörper (10) einander überlappen.

2. Bahnförmiger Vegetationskörper nach Anspruch 1, **dadurch gekennzeichnet, daß** die Überlappung des Vegetationskörpers (10) auf beiden Seiten gleichmäßig ist.

3. Bahnförmiger Vegetationskörper nach einem der Ansprüche 1 oder 2, **dadurch gekennzeichnet, daß** die Überlappung des Vegetationskörpers (10) beidseitig eine Breite von 2 bis 20 cm aufweist.

4. Bahnförmiger Vegetationskörper nach einem der Ansprüche 1 bis 3, **dadurch gekennzeichnet, daß** die Unterlage (14) eine Matte aus nachwachsenden Rohstoffen, wie z.B. Kokosfasern ist.

5. Bahnförmiger Vegetationskörper nach einem der vorhergehenden Ansprüche 1 bis 3, **dadurch gekennzeichnet, daß** die Unterlage (14) eine Matte aus Mineralwolle ist.

6. Bahnförmiger Vegetationskörper nach einem der vorhergehenden Ansprüche 1 bis 3, **dadurch gekennzeichnet, daß** die Unterlage (14) eine Matte aus Textilfasern ist.

7. Bahnförmiger Vegetationskörper nach einem der vorhergehenden Ansprüche 1 bis 3, **dadurch gekennzeichnet, daß** die Unterlage (14) ein Vlies aus Kunstfasern ist.

8. Bahnförmiger Vegetationskörper nach einem der vorhergehenden Ansprüche 1 bis 7, **dadurch gekennzeichnet, daß** die Strukturmatte (12) und die Unterlage (14) eine Breite von jeweils 0,5 bis 2 m aufweisen.

9. Bahnförmiger Vegetationskörper nach einem der vorhergehenden Ansprüche 1 bis 8, **dadurch gekennzeichnet, daß** der Vegetationskörper (10) eine Dicke von 0,5 bis 10 cm aufweist.

10. Bahnförmiger Vegetationskörper (10) mit einer Strukturmatte (12), insbesondere einer Schlingmatte (16), welche auf wenigstens einer Unterlage (14) angeordnet ist, wobei die Strukturmatte mit einem Substrat (32) und mit keimfähigem Pflanzenmaterial, insbesondere mit Samen, Sprossen, Sporen oder Sproßteilen, ausfüllbar ist, **dadurch gekennzeichnet, daß** die Unterseite (26) der Strukturmatte (12) mit einem Vlies (28) verbunden ist, und daß das Vlies (28) derart auf der Unterlage (14) angeordnet ist, daß ein erster Seitenkantenbereich (18) des Vlieses (28) über eine erste Seitenkante (20) der Unterlage (14) übersteht und daß ein gegenüberliegender zweiter Seitenkantenbereich (22) der Unterlage (14) unter einer zweiten Seitenkante (24) des Vlieses (28) hervorsteht, so daß Vlies (28) und Unterlage (14) benachbarter Vegetationskörper (10) einander überlappen.

11. Bahnförmiger Vegetationskörper nach Anspruch 10, **dadurch gekennzeichnet, daß** das Vlies (28) ein Polyestervlies ist.

12. Bahnförmiger Vegetationskörper nach einem der vorhergehenden Ansprüche 1 - 11, **dadurch gekennzeichnet, daß** die Strukturmatte (12) mit einem Substrat (32) und mit keimfähigem Pflanzenmaterial, insbesondere mit Samen, Sprossen, Sporen und Sprossteilen, ausgefüllt ist, und daß der bahnförmige Vegetationskörper ein fertig begrüntes Produkt ist.

13. Bahnförmiger Vegetationskörper nach einem der vorhergehenden Ansprüche 1 - 12, **dadurch gekennzeichnet, daß** die Strukturmatte (12) durch organisches Material gebildet ist.

14. Bahnförmiger Vegetationskörper nach Anspruch 13, **dadurch gekennzeichnet, daß** das organische Material der Strukturmatte (12) durch Kokos gebildet ist.

## Claims

1. Web-like vegetation member (10) with a textured mat (12), particularly a loop mat (16), which is placed on at least one base (14), the textured mat being fillable with a substrate (32) and with germinatable plant material, particularly with seed, shoots, spores or shoot parts, **characterized in that** the textured mat (12) is placed on the base (14) in such a way that a first lateral edge area (18) of the textured mat (12) projects over a first lateral edge (20) of the base (14) and that a facing, second lateral edge area (22) of the base (14) projects under a second lateral edge (24) of the textured mat (12), so that the textured mat (12) and base (14) of neighbouring vegetation members (10) overlap one another.

2. Web-like vegetation member according to claim 1, **characterized in that** the overlap of the vegetation member (10) is the same on both sides.

3. Web-like vegetation member according to one of the claims 1 or 2, **characterized in that** the overlap of the vegetation member (10) has a width of 2 to 20 cm on both sides.

4. Web-like vegetation member according to one of the claims 1 to 3, **characterized in that** the base (14) is a mat of aftergrowing raw materials, such as e.g. coconut fibres.

5. Web-like vegetation member according to one of the preceding claims 1 to 3, **characterized in that** the base (14) is a mineral wool mat.

6. Web-like vegetation member according to one of the preceding claims 1 to 3, **characterized in that** the base (14) is a textile fibre mat.

7. Web-like vegetation member according to one of the preceding claims 1 to 3, **characterized in that** the base (14) is an artificial fibre fleece.

8. Web-like vegetation member according to one of the preceding claims 1 to 7, **characterized in that** the textured mat (12) and base (14) have in each case a width of 0.5 to 2 m.

9. Web-like vegetation member according to one of the preceding claims 1 to 8, **characterized in that** the vegetation member (10) has a thickness of 0.5 to 10 cm.

10. Web-like vegetation member (10) with a textured mat (12), particularly a loop mat (16), which is placed on at least one base (14), the textured mat being fillable with a substrate (32) and with germinatable plant material, particularly with seed, shoots, spores or shoot parts, **characterized in that** the underside (26) of the textured mat (12) is connected to a fleece (28) and that the fleece (28) is placed on the base (14) in such a way that a first lateral edge area (18) of the fleece (28) projects over a first lateral edge (20) of the base (14) and that a facing, second lateral edge area (22) of the base (14) projects under a second lateral edge (24) of the fleece (28), so that the fleece (28) and base (14) of neighbouring vegetation members (10) overlap one another.

11. Web-like vegetation member according to claim 10, **characterized in that** the fleece (28) is a polyester fleece.

12. Web-like vegetation member according to one of the preceding claims 1 to 11, **characterized in that** the textured mat (12) is filled with a substrate (32) and with germinatable plant material, particularly with seed, shoots, spores and shoot parts and that the web-like vegetation member is a finished, greened product.

13. Web-like vegetation member according to one of the preceding claims 1 to 12, **characterized in that** the textured mat (12) is formed by organic material.

14. Web-like vegetation member according to claim 13, **characterized in that** the organic material of the textured mat (12) is formed by coconut fibres.

## Revendications

1. Corps de végétation (10) en forme de bande avec une natte structurée (12), en particulier avec une natte bouclée (16), disposée sur au moins un support (14), la natte structurée pouvant être remplie d'un substrat (32) et d'un matériau végétal germinatif, en particulier de graines, de pousses et de spores ou de parties de pousses, **caractérisé en ce que** la natte structurée (12) est disposée sur le support (14) de façon qu'une première zone du bord latéral (18) de la natte structurée (12) fasse saillie au-dessus d'un premier bord latéral (20) du support (14) et qu'une seconde zone du bord latéral (22) opposée du support (14) fasse saillie au-dessous d'un second bord latéral (24) de la natte structurée (12), de sorte que la natte structurée (12) et le support (14) de corps de végétation (10) voisins se chevauchent.

2. Corps de végétation en forme de bande selon la revendication 1, **caractérisé en ce que** le chevauchement du corps de végétation (10) est uniforme des deux côtés.

3. Corps de végétation en forme de bande selon une des revendications 1 ou 3, **caractérisé en ce que** le chevauchement du corps de végétation (10) présente, des deux côtés, une largeur comprise entre 2 et 20 cm.

4. Corps de végétation en forme de bande selon une des revendications 1 à 3, **caractérisé en ce que** le support (14) est une natte de matières premières qui repoussent, par exemple, des fibres de coco.

5. Corps de végétation en forme de bande selon une des revendications précédentes 1 à 3, **caractérisé en ce que** le support (15) est une natte de laine minérale.

6. Corps de végétation en forme de bande selon une des revendications précédentes 1 à 3, **caractérisé en ce que** le support (14) est une natte en fibres textiles.

7. Corps de végétation en forme de bande selon une des revendications précédentes 1 à 3, **caractérisé en ce que** le support (14) est une nappe de fibres artificielles.

8. Corps de végétation en forme de bande selon une des revendications précédentes 1 à 7, **caractérisé en ce que** la natte structurée (12) et le support (14) présentent respectivement une largeur comprise entre 0,5 et 2 m.

9. Corps de végétation en forme de bande selon une des revendications précédentes 1 à 8, **caractérisé en ce que** le corps de végétation (10) présente une épaisseur comprise entre 0,5 et 10 cm.

10. Corps de végétation (10) avec une natte structurée (12), en particulier une natte bouclée (16), disposée sur au moins un support (14), la natte structurée pouvant être remplie d'un substrat (32) et d'un matériau végétal germinatif, en particulier de graines, pousses, spores ou de parties de pousses, **caractérisé en ce que** la face inférieure (26) de la natte structurée (12) est reliée à une nappe (28) et que la nappe (28) est disposée sur le support (14) de façon qu'une première zone du bord latéral (18) de la nappe (28) fasse saillie au-dessus d'un premier bord (20) du support (14) et qu'une seconde zone de bord latéral (22) opposée du support (14) fasse saillie au-dessous d'un second bord latéral (24) de la nappe 28, de sorte que la nappe (28) et le support (14) de corps de végétation voisins se chevauchent.

11. Corps de végétation en forme de bande selon la revendication 10, **caractérisé en ce que** la nappe (28) est une nappe polyester.

12. Corps de végétation en forma de bande selon une des revendications précédentes 1 à 11, **caractérisé en ce que** la natte structurée (12) est remplie d'un substrat (32) et d'un matériau végétal, en particulier de graines, de pousses, de spores et de parties de pousses, et que le corps de végétation en forme de bande est un produit gazonné fini.

13. Corps de végétation en forma de bande selon une des revendications précédentes 1 à 12, **caractérisé en ce que** la natte structurée (12) est formée par un matériau organique.

14. Corps de végétation en forma de bande selon la revendication 13, **caractérisé en ce que** le matériau organique de la natte structurée (12) est constitué de coco.
